# EUROPEAN PATENT APPLICATION

(11) **EP 4 589 816 A1**
(43) Date of publication of application: **23.07.2025**
(21) Application number: 24218541.1
(22) Date of filing: 10.12.2024
(51) Int. Cl.: H02K 1/276, H02K 1/28, H02K 1/04

(54) **MOTOR ROTOR INCLUDING EMBEDDED PERMANENT MAGNETS HAVING TWO COATINGS, ELECTRIC MOTOR AND POWERTRAIN OF VEHICLE**

(30) Priority: 22.01.2024 CN 202410088772
(71) Applicant: Huawei Digital Power Technologies Co., Ltd., Shenzhen, Guangdong 518043 (CN)
(72) Inventor: WU, Xiaopeng, Shenzhen, 518043 (CN); ZHAO, Xinying, Shenzhen, 518043 (CN); WANG, Shaofei, Shenzhen, 518043 (CN); LIN, Mengxuan, Shenzhen, 518043 (CN); LI, Haojie, Shenzhen, 518043 (CN)
(74) Representative: Gill Jennings & Every LLP

(57) **Abstract**

This application provides a motor rotor including magnetic steels with a plurality of coatings, a motor, a powertrain, and a vehicle. The motor rotor includes a rotor iron core, a plurality of magnetic steels, a plurality of fastening coatings, and a plurality of protective coatings, the rotor iron core includes a plurality of magnetic steel grooves, the magnetic steel groove penetrates the rotor iron core in an axial direction of the rotor iron core, and each magnetic steel groove is configured to accommodate one or more magnetic steels. The one magnetic steel includes two first surfaces parallel to the axial direction of the rotor iron core, the two first surfaces are arranged opposite to each other, a spacing between one first surface and an inner wall of one magnetic steel groove is greater than a spacing between the other first surface and an inner wall of the magnetic steel groove, a gap between the one first surface and the inner wall of the magnetic steel groove is used to accommodate one fastening coating, and a gap between the other first surface and the inner wall of the magnetic steel groove is used to accommodate one protective coating. In this application, the magnetic steel is fastened by using the fastening coating, so that a risk of damage to the protective coating is reduced, and the magnetic steel can be better isolated from the rotor iron core by using the fastening coating and the protective coating.

## Description

### TECHNICAL FIELD

This application relates to the field of motor technologies, and in particular, to a motor rotor including magnetic steels with a plurality of coatings, a motor, a powertrain, and a vehicle.

### BACKGROUND

In a permanent magnet motor, a motor rotor includes a rotor iron core and a magnetic steel, and the magnetic steel is mounted and fastened to a magnetic steel groove in the rotor iron core. To reduce an eddy current loss of the motor rotor, the magnetic steel needs to be insulated and isolated from the rotor iron core. In the conventional technology, insulation between the magnetic steel and the rotor iron core is poor, and an insulation layer between the magnetic steel and the rotor iron core is prone to damage. Consequently, output performance of the motor is reduced.

### SUMMARY

This application provides a motor rotor including magnetic steels with a plurality of coatings, a motor, a powertrain, and a vehicle.

According to a first aspect, this application provides a motor rotor including magnetic steels with a plurality of coatings. The motor rotor includes a rotor iron core, a plurality of magnetic steels, a plurality of fastening coatings, and a plurality of protective coatings. The rotor iron core includes a plurality of magnetic steel grooves, and the magnetic steel groove penetrates the rotor iron core in an axial direction of the rotor iron core. Each magnetic steel groove is configured to accommodate one or more magnetic steels. The one magnetic steel includes two first surfaces parallel to the axial direction of the rotor iron core, and the two first surfaces are arranged opposite to each other. A spacing between one first surface and an inner wall of one magnetic steel groove is greater than a spacing between the other first surface and an inner wall of the magnetic steel groove. A gap between the one first surface and the inner wall of the magnetic steel groove is used to accommodate one fastening coating, and a gap between the other first surface and the inner wall of the magnetic steel groove is used to accommodate one protective coating.

In this embodiment of this application, the magnetic steel is fastened by using the fastening coating, so that a risk of damage to the protective coating is reduced, and insulation and isolation between the magnetic steel and the rotor iron core is improved. The one fastening coating and the one protective coating are arranged opposite to each other on two sides of the one magnetic steel, and the fastening coating may be further configured to isolate the magnetic steel from the inner wall of the magnetic steel groove, so that both the two first surfaces of the magnetic steel can be better insulated from the rotor iron core.

In addition, in this application, because the spacing between the one first surface and the inner wall of the magnetic steel groove is large, a thickness of the fastening coating in the arrangement direction of the two first surfaces may be set to be large, thereby improving reliability of fastening between the magnetic steel and the inner wall of the magnetic steel groove. In addition, because the protective coating is mainly used to isolate the magnetic steel from the inner wall of the magnetic steel groove, in this application, the gap between the other first surface and the inner wall of the magnetic steel groove is small, so that the magnetic steel can be better isolated from the inner wall of the magnetic steel groove. In addition, this helps reduce an equivalent air gap length of a magnetic circuit, and improves output performance of the motor.

In an embodiment, the one fastening coating includes two first side surfaces, the two first side surfaces face away from each other in an arrangement direction of the two first surfaces, and the two first side surfaces are respectively in contact with the one first surface and the inner wall of the magnetic steel groove. In this embodiment of this application, the two first side surfaces of the fastening coating are respectively in contact with the one first surface and the inner wall of the magnetic steel groove. This helps fasten the magnetic steel to the rotor iron core by using the fastening coating.

In an embodiment, one first side surface of the one fastening coating is fastened to the one first surface. In this embodiment of this application, the fastening coating is fastened to the magnetic steel. This helps assembly of the fastening coating and the magnetic steel and fastening of the fastening coating and the magnetic steel in the magnetic steel groove. In addition, the fastening coating is fastened to the one first surface, so that the fastening coating can isolate the first surface from air, thereby improving anti-corrosion performance of the magnetic steel.

In an embodiment, the one protective coating includes two second side surfaces, the two second side surfaces face away from each other in the arrangement direction of the two first surfaces, and the two second side surfaces are respectively in contact with the other first surface and the inner wall of the magnetic steel groove. In this embodiment of this application, the two second side surfaces of the protective coating are respectively in contact with the other first surface and the inner wall of the magnetic steel groove. This helps fasten the magnetic steel to the rotor iron core through cooperation of the fastening coating. In addition, because the protective coating is in contact with the other first surface, the protective coating can protect the magnetic steel, thereby reducing a risk of oxidation of the magnetic steel. The protective coating is in contact with the inner wall of the magnetic steel groove. This helps reduce a spacing between the other first surface and the inner wall of the magnetic steel groove, thereby reducing an equivalent air gap of a magnetic circuit.

In an embodiment, one second side surface of the one protective coating is fastened to the other first surface. In this embodiment of this application, the protective coating is fastened to the magnetic steel. This helps assembly of the protective coating and the magnetic steel and fastening of the protective coating and the magnetic steel in the magnetic steel groove. In addition, because the protective coating is fastened to the other first surface, the protective coating can isolate the other first surface from air, thereby improving anti-corrosion performance of the magnetic steel.

In an embodiment, an orthographic projection area of the one fastening coating on the one first surface in the arrangement direction of the two first surfaces is less than or equal to an orthographic projection area of the one protective coating on the one first surface in the arrangement direction of the two first surfaces.

In this embodiment of this application, the fastening coating is mainly used to fasten the magnetic steel, and a small orthographic projection area of the fastening coating on the first surface can be conducive to fastening. Because the fastening coating is arranged between the one first surface and the inner wall of the magnetic steel groove, the first surface is spaced from the inner wall of the magnetic steel groove, so that the first surface can be insulated and isolated from the rotor iron core. In addition, because the fastening coating does not completely cover the one first surface, a gap between the one first surface and the inner wall of the magnetic steel groove may be used to circulate a coolant, to cool the magnetic steel. In addition, because a thickness of the one protective coating is small, in this embodiment of this application, setting the orthographic projection area of the one protective coating on the one first surface to be large helps effectively isolate the other first surface of the magnetic steel from the inner wall of the magnetic steel groove. When the one protective coating is coated on the other first surface, the protective coating largely covers the other first surface, so that the protective coating can effectively protect the magnetic steel.

In an embodiment, the one fastening coating includes a foaming coating. The foaming coating can expand when heated, and the expanded foaming coating can be cured after the expanded foaming coating is cooled. Due to an expansion feature of the foaming coating, the foamed foaming coating is used to fill a gap between the magnetic steel and the inner wall of the magnetic steel groove, so that the magnetic steel is tightly bonded to the inner wall of the magnetic steel groove, to fasten the magnetic steel. In this embodiment of this application, the foaming coating is used as the fastening coating, so that a process is simple, and the magnetic steel can be reliably fastened.

In an embodiment, the one protective coating includes an epoxy coating. The epoxy coating has poor conductivity, and has an insulation function. In this embodiment of this application, the epoxy coating is used as the protective coating, so that the magnetic steel can be better insulated and isolated from the rotor iron core. When the epoxy coating is coated on the other first surface of the magnetic steel, the epoxy coating can better protect the magnetic steel, thereby improving anti-corrosion performance of the magnetic steel.

In an embodiment, in a radial direction of the rotor iron core, a minimum distance between the one fastening coating and an outer circumferential surface of the rotor iron core is greater than a minimum distance between the one protective coating and the outer circumferential surface of the rotor iron core. In this embodiment of this application, the motor stator is sleeved on the outer circumferential surface of the rotor iron core. The spacing between the one first surface and the inner wall of the magnetic steel groove is large, and the fastening coating has a low magnetic permeability. Therefore, disposing the fastening coating away from the motor stator helps reduce magnetic resistance of the motor rotor, to improve output performance of the motor.

In an embodiment, the magnetic steel includes two second surfaces parallel to the axial direction of the rotor iron core, the two second surfaces are arranged opposite to each other, and the second surfaces intersect the first surfaces; and a spacing between the one first surface and the inner wall of the magnetic steel groove is less than a spacing between any second surface and an inner wall of the magnetic steel groove.

In this embodiment of this application, the spacing between the one first surface and the inner wall of the magnetic steel groove is less than the spacing between the second surface and the inner wall of the magnetic steel groove, so that the fastening coating arranged between the one first surface and the inner wall of the magnetic steel groove can fasten the magnetic steel, and the fastening coating is not wasted due to an excessively large thickness of the fastening coating. When the arrangement direction of the two first surfaces is parallel to an arrangement direction of a magnetic south pole and a magnetic north pole of the magnetic steel, a small spacing between the one first surface and the inner wall of the magnetic steel groove helps reduce an equivalent air gap of a magnetic circuit. The spacing between the other first surface and the inner wall of the magnetic steel groove is less than the spacing between the second surface and the inner wall of the magnetic steel groove. This also helps reduce the equivalent air gap of the magnetic circuit. In addition, the spacing between the second surface and the inner wall of the magnetic steel groove is large, so that the second surface may be insulated and isolated from the magnetic steel groove through air. This helps reduce costs.

In an embodiment, the orthographic projection area of the one fastening coating on the one first surface in the arrangement direction of the two first surfaces is greater than an area of any second surface. The orthographic projection area of the fastening coating on the one first surface is large, so that the fastening coating can more firmly fasten the magnetic steel in the magnetic steel groove. In addition, when the fastening coating is coated on the one first surface, a projection area of the fastening coating is large, so that the fastening coating can more completely cover the one first surface, to better protect the magnetic steel.

In an embodiment, the orthographic projection area of the one protective coating on the one first surface in the arrangement direction of the two first surfaces is greater than the area of any second surface. The orthographic projection area of the protective coating on the one first surface is large, so that the protective coating can effectively isolate the magnetic steel from the rotor iron core. In addition, when the protective coating is coated on the other first surface, a projection area of the protective coating is large, so that the protective coating can more completely cover the other first surface, to better protect the magnetic steel.

In an embodiment, a gap between one second surface and an inner wall of the magnetic steel groove is used to accommodate the one protective coating; and the one protective coating accommodated in the gap between the one second surface and the inner wall of the magnetic steel groove is spaced from the inner wall of the magnetic steel groove, and is in contact with the one second surface. In this embodiment of this application, the one protective coating accommodated in the gap between the one second surface and the inner wall of the magnetic steel groove is in contact with the one second surface, so that the one protective coating accommodated in the gap between the one second surface and the inner wall of the magnetic steel groove can protect the magnetic steel, thereby improving anti-corrosion performance of the magnetic steel. The one protective coating accommodated in the gap between the one second surface and the inner wall of the magnetic steel groove is spaced from the inner wall of the magnetic steel groove, so that the gap between the inner wall of the magnetic steel groove and the one protective coating accommodated in the gap between the one second surface and the inner wall of the magnetic steel groove may be used to circulate a coolant, to facilitate heat dissipation of the magnetic steel.

In an embodiment, a thickness of the one protective coating accommodated in the gap between the one second surface and the inner wall of the magnetic steel groove is less than a thickness of the one fastening coating, and is less than or equal to a thickness of the one protective coating. In this embodiment of this application, because the spacing between the one second surface and the inner wall of the magnetic steel groove is large, so that the one second surface may be insulated and isolated from the inner wall of the magnetic steel groove through air. A small thickness of the one protective coating accommodated in the gap between the one second surface and the inner wall of the magnetic steel groove helps reduce costs.

In an embodiment, the magnetic steel includes two third surfaces perpendicular to the axial direction of the rotor iron core, the third surfaces intersect the first surfaces, the orthographic projection area of the one fastening coating on the one first surface in the arrangement direction of the two first surfaces is greater than an area of any third surface. The orthographic projection area of the fastening coating on the one first surface is large, so that the fastening coating can more firmly fasten the magnetic steel in the magnetic steel groove. In addition, when the fastening coating is coated on the one first surface, a projection area of the fastening coating is large, so that the fastening coating can more completely cover the one first surface, to better protect the magnetic steel.

In an embodiment, the orthographic projection area of the one protective coating on the one first surface in the arrangement direction of the two first surfaces is greater than the area of any third surface. The orthographic projection area of the protective coating on the one first surface is large, so that the protective coating can effectively isolate the magnetic steel from the rotor iron core. In addition, when the protective coating is coated on the other first surface, a projection area of the protective coating is large, so that the protective coating can more completely cover the other first surface, to better protect the magnetic steel.

In an embodiment, one protective coating is fastened to one third surface. The one protective coating is in contact with the one third surface, so that the protective coating fastened to the one third surface can protect the magnetic steel, thereby improving anti-corrosion performance of the magnetic steel.

In an embodiment, a thickness of the one protective coating fastened to the one third surface is less than the thickness of the one fastening coating, and is less than or equal to the thickness of the one protective coating. In this embodiment of this application, because the third surface is not in contact with the inner wall of the magnetic steel groove, and there is no insulation and isolation requirement between the third surface and the rotor iron core, a small thickness of the one protective coating fastened to the one third surface helps reduce costs.

According to a second aspect, this application provides a motor. The motor includes a motor shaft and the foregoing motor rotor, and a rotor iron core of a motor rotor is sleeved on and fastened to the motor shaft.

According to a third aspect, this application provides a powertrain. The powertrain includes a reducer and the motor described above, and a reducer input shaft of the reducer is configured to be in transmission connection with a motor shaft of the motor.

According to a fourth aspect, this application provides an electric vehicle. The electric vehicle includes wheels, a battery pack, and the motor described above or the powertrain described above, and the motor or the powertrain is configured to: receive electric power supplied by a power battery, and drive the wheels.

### BRIEF DESCRIPTION OF DRAWINGS

To describe technical solutions in embodiments of this application more clearly, the following describes accompanying drawings used in embodiments of this application.
FIG. 1 is a diagram of an electric vehicle according to an embodiment of this application;
FIG. 2 is a diagram of a powertrain according to an embodiment of this application;
FIG. 3 is a diagram of a motor rotor according to an embodiment of this application;
FIG. 4 is a diagram of one magnetic steel groove, one magnetic steel, one fastening coating, and one protective coating according to an embodiment of this application;
FIG. 5 is a diagram of one magnetic steel groove and one magnetic steel according to an embodiment of this application;
FIG. 6 is a three-dimensional diagram of one magnetic steel, one fastening coating, and one protective coating according to an embodiment of this application;
FIG. 7 is a three-dimensional diagram of one magnetic steel, one fastening coating, and one protective coating according to an embodiment of this application;
FIG. 8 is a three-dimensional diagram of one magnetic steel, one fastening coating, and one protective coating according to an embodiment of this application;
FIG. 9 is a diagram of one magnetic steel groove, one magnetic steel, one fastening coating, and a plurality of protective coatings according to an embodiment of this application; and
FIG. 10 is a three-dimensional diagram of one magnetic steel and a plurality of coatings according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of this application, unless otherwise stated, "a plurality of" means two or more than two.

In addition, in this specification, position terms such as "up" and "down" are defined relative to positions of structures in the accompanying drawings. It should be understood that these directional terms are relative concepts used for relative description and clarification, and may vary accordingly with changes of the positions of the structures.

For ease of understanding, the following first explains and describes related technical terms used in embodiments of this application.

Parallelism: Parallelism defined in embodiments of this application is not limited to absolute parallelism. The definition of parallelism herein may be understood as basic parallelism, and includes non-absolute parallelism caused by factors such as an assembly tolerance, a design tolerance, and impact of structure flatness.

Perpendicular: Perpendicular defined in embodiments of this application is not limited to an absolute perpendicular intersection (an included angle is 90 degrees) relationship, includes a non-absolute perpendicular intersection relationship caused by factors such as an assembly tolerance, a design tolerance, and impact of structure flatness, and allows an error within a small angle range. For example, a relationship within an assembly error range from 80 degrees to 100 degrees may be understood as a perpendicular relationship.

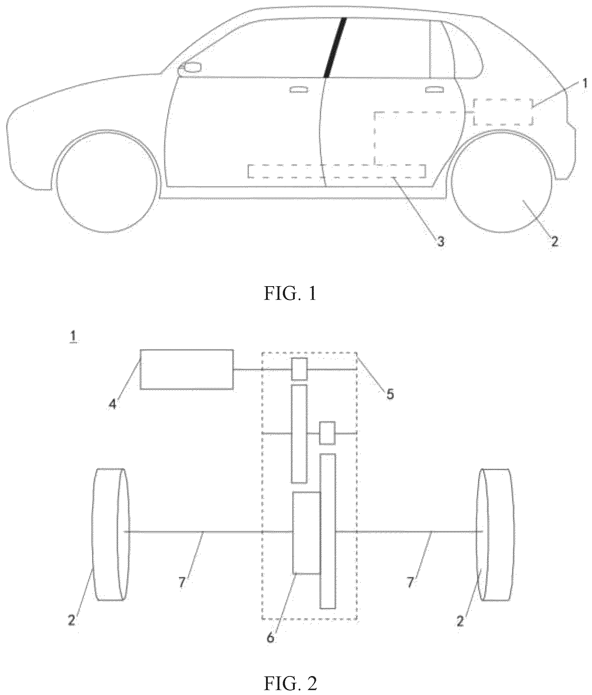

FIG. 1 is a diagram of an electric vehicle according to an embodiment of this application. The electric vehicle includes a battery pack 3, wheels 2, and a powertrain 1. The powertrain 1 and the battery pack 3 are mounted on a frame of the electric vehicle, and the powertrain 1 is configured to: receive electric power supplied by the battery pack 3, and drive the wheels 2 to rotate.

The electric vehicle includes a two-wheeled, three-wheeled, or four-wheeled vehicle. The electric vehicle may be one of a pure electric vehicle (Pure Electric Vehicle/Battery Electric Vehicle, PEVBEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), and a new energy vehicle (New Energy Vehicle). In an implementation, the electric vehicle is a transportation vehicle. For example, the electric vehicle is one of a commercial vehicle, a passenger vehicle, a motorcycle, a flight vehicle, and a train. In an implementation, the electric vehicle is an industrial vehicle or an engineering vehicle. For example, the electric vehicle is one of a forklift truck, a trailer, a tractor, an excavator, a bulldozer, and a crane. In an implementation, the vehicle may be an electric vehicle or a fuel vehicle. In an implementation, the electric vehicle may alternatively be an agricultural device (such as a lawn mower or a harvester), an amusement device, a toy vehicle, or the like.

In an implementation, the electric vehicle may include one or more powertrains 1.

FIG. 2 is a diagram of the powertrain 1 according to an embodiment of this application. The powertrain 1 includes a reducer 5 and a motor 4. The motor 4 includes a motor shaft, and the motor shaft is configured to be in transmission connection with an input shaft of the reducer 5. Rotation of the motor shaft may drive the input shaft of the reducer 5 to rotate, so that power output by the motor 4 is transmitted to the input shaft of the reducer 5. An axial direction of the input shaft of the reducer 5 is parallel to an axial direction of the motor 4. A gear set of the reducer 5 can change a transmission ratio of the motor 4 to the wheels 2.

In an implementation, the reducer 5 further includes a differential 6 (as shown in FIG. 2). The differential 6 is in transmission connection with the gear set of the reducer 5. A half shaft 7 of the differential 6 is fastened to the wheel 2. The reducer 5 receives power transmitted by the motor shaft by using the gear set of the reducer 5, and transmits the power to the half shaft 7 by using the differential 6, to drive the wheel 2 to rotate. The differential 6 implements differential rotation of two half shafts 7 of the differential 6 by using a planetary gear set of the differential 6.

In an implementation, the powertrain 1 may include one motor 4 or one reducer 5. In an implementation, the powertrain 1 may include a plurality of motors 4 or a plurality of reducers 5. For example, the powertrain 1 may be a dual-drive powertrain.

In an implementation, the motor 4 includes the motor shaft, a motor rotor 10, and a motor stator. The motor rotor 10 includes a rotor iron core 300 and a plurality of magnetic steels 100. The rotor iron core 300 is sleeved and fastened to an outer surface of the motor shaft. The plurality of magnetic steels 100 are accommodated in magnetic steel grooves 310 of the rotor iron core 300. The magnetic steel 100 is also referred to as a permanent magnet. The magnetic steel 100 is configured to generate a magnetic field of the motor rotor 10. The motor stator includes a stator iron core and a stator winding. The stator iron core is sleeved on the motor rotor 10 and is spaced from an outer surface of the motor rotor 10. The motor winding is mounted and fastened to a winding groove of the motor stator.

In an implementation, the powertrain 1 further includes a motor control unit. The motor control unit is connected to the battery pack 3 and the motor winding. The motor control unit is configured to: receive a direct current output by the battery pack 3, convert the direct current output by the battery pack 3 into an alternating current, and transmit the alternating current to the motor winding. A rotating magnetic field generated after the motor winding receives the alternating current interacts with the plurality of magnetic steels 100. The motor rotor 10 rotates due to an action of the electromagnetic field, to drive the motor shaft to rotate.

To reduce an eddy current loss of the motor rotor 10, the magnetic steel 100 needs to be insulated and isolated from the rotor iron core 300. Generally, insulation processing may be performed on a surface of the magnetic steel 100 by coating the surface of the magnetic steel 100 with an insulation coating. However, when the magnetic steel 100 is fastened in the magnetic steel groove 310 of the rotor iron core 300, the insulation coating is prone to damage. Particularly, when the magnetic steel 100 is fastened in the magnetic steel groove 310 of the rotor iron core 300 through riveting, elastic pressing, or the like, the insulation coating on the surface of the magnetic steel 100 is prone to damage. Consequently, insulation and isolation performance between the magnetic steel 100 and the rotor iron core 300 is reduced. In this application, a plurality of coatings are included between the magnetic steel 100 and an inner wall of the magnetic steel groove 310, the magnetic steel 100 is mounted and fastened in the magnetic steel groove 310, the plurality of coatings between the magnetic steel 100 and the inner wall of the magnetic steel groove 310 are not prone to damage, and the insulation and isolation performance between the magnetic steel 100 and the rotor iron core 300 is good. This helps improve performance of the motor 4.

The following describes in detail the motor rotor 10 in this application.

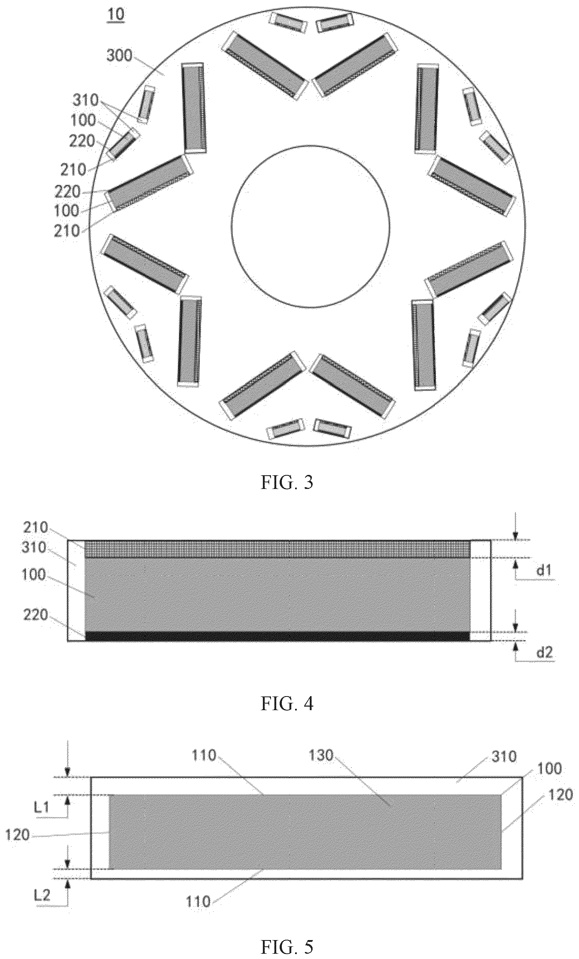

Refer to FIG. 3, FIG. 4, and FIG. 5. FIG. 3 is a diagram of the motor rotor 10 according to an embodiment of this application. FIG. 4 is a diagram of one magnetic steel groove 310, one magnetic steel 100, one fastening coating 210, and one protective coating 220 according to an embodiment of this application. FIG. 5 is a diagram of one magnetic steel groove 310 and one magnetic steel 100 according to an embodiment of this application. This application provides the motor rotor 10 including magnetic steels 100 with a plurality of coatings. The motor rotor 10 includes the rotor iron core 300, a plurality of magnetic steels 100, a plurality of fastening coatings 210, and a plurality of protective coatings 220. The rotor iron core 300 includes a plurality of magnetic steel grooves 310, and the magnetic steel groove 310 penetrates the rotor iron core 300 in an axial direction of the rotor iron core 300. Each magnetic steel groove 310 is configured to accommodate one or more magnetic steels 100. The one magnetic steel 100 includes two first surfaces 110 parallel to the axial direction of the rotor iron core 300, the two first surfaces 110 are arranged opposite to each other, a spacing between one first surface 110 and an inner wall of one magnetic steel groove 310 is greater than a spacing between the other first surface 110 and an inner wall of the magnetic steel groove 310, a gap between the one first surface 110 and the inner wall of the magnetic steel groove 310 is used to accommodate one fastening coating 210, and a gap between the other first surface 110 and the inner wall of the magnetic steel groove 310 is used to accommodate one protective coating 220.

The axial direction of the rotor iron core 300 is parallel to an axial direction of a motor shaft. In an implementation, the axial direction of the rotor iron core 300 is parallel to a length direction of the magnetic steel 100.

The magnetic steel 100 is accommodated in the magnetic steel groove 310. The two first surfaces 110 of the magnetic steel 100 are parallel to each other, and a plane on which the first surface 110 is located is parallel to the axial direction of the rotor iron core 300. An arrangement direction of the two first surfaces 110 is perpendicular to the plane on which the first surface 110 is located. The magnetic steel groove 310 includes two first groove walls arranged opposite to each other in the arrangement direction of the two first surfaces 110. The one first surface 110 is spaced from one first groove wall, and the spacing between the one first surface 110 and the one first groove wall is L1 in FIG. 5. The other first surface is spaced from the other first groove wall, and the spacing between the other first surface and the other first groove wall is L2 in FIG. 5. In the arrangement direction of the two first surfaces 110, the spacing between the one first surface 110 and the one first groove wall is greater than the spacing between the other first surface 110 and the other first groove wall, in other words, L1 is greater than L2.

The one fastening coating 210 is arranged between the one first surface 110 and the one first groove wall. The fastening coating 210 is configured to fasten the magnetic steel 100 in the magnetic steel groove 310. Because the fastening coating 210 has an insulation feature, the fastening coating 210 can isolate the magnetic steel 100 from the one first groove wall, thereby reducing an eddy current loss between the magnetic steel 100 and the rotor iron core 300.

The one protective coating 220 is arranged between the other first surface 110 and the other first groove wall. Because the protective coating 220 has an insulation feature, the protective coating 220 can isolate the magnetic steel 100 from the other first groove wall, thereby reducing the eddy current loss between the magnetic steel 100 and the rotor iron core 300.

In this embodiment of this application, the magnetic steel 100 is fastened by using the fastening coating 210, so that a risk of damage to the protective coating 220 is reduced, and insulation and isolation between the magnetic steel 100 and the rotor iron core 300 are improved. The one fastening coating 210 and the one protective coating 220 are arranged opposite to each other on two sides of the one magnetic steel 100, and the fastening coating 210 may be further configured to isolate the magnetic steel 100 from the inner wall of the magnetic steel groove 310, so that both the two first surfaces 110 of the magnetic steel 100 can be better insulated from the rotor iron core 300.

In addition, in this application, because the spacing between the one first surface 110 and the one first groove wall is large, a thickness of the fastening coating 210 in the arrangement direction of the two first surfaces 110 may be set to be large, thereby improving reliability of fastening between the magnetic steel 100 and the inner wall of the magnetic steel groove 310. In addition, because the protective coating 220 is mainly configured to isolate the magnetic steel 100 from the inner wall of the magnetic steel groove 310, in this application, a gap between the other first surface 110 and the inner wall of the magnetic steel groove 310 is small, so that the magnetic steel 100 can be better isolated from the inner wall of the magnetic steel groove 310. In addition, this helps reduce an equivalent air gap length of a magnetic circuit, and improves output performance of the motor 4.

In an embodiment, the fastening coating 210 includes an expanded state and a contracted state, and in the arrangement direction of the two first surfaces 110, a thickness of the fastening coating 210 in the expanded state is greater than a thickness of the fastening coating 210 in the contracted state. The thickness of the fastening coating 210 in the contracted state is small, so that when the magnetic steel 100 is mounted in the magnetic steel groove 310, the protective coating 220 is not prone to damage due to friction with the magnetic steel or the inner wall of the magnetic steel groove 310. After the magnetic steel 100 is placed in the magnetic steel groove 310, the fastening coating 210 changes from the contracted state to the expanded state. The thickness of the fastening coating 210 in the expanded state is large, so that the fastening coating 210 fills a gap between the one first surface 110 of the magnetic steel 100 and the inner wall of the magnetic steel groove 310, to fasten the magnetic steel 100 in the magnetic steel groove 310.

In this embodiment of this application, the magnetic steel 100 is fastened based on an expansion characteristic of the fastening coating 210, so that a process is simple, and a structure is reliable. In addition, because neither the fastening coating 210 nor the protective coating 220 is prone to damage, the magnetic steel 100 can be better isolated from inner walls of the magnetic steel groove 310. In addition, because the fastening coating 210 fastens the magnetic steel 100 in the arrangement direction of the two first surfaces 110, if no protective coating 220 is disposed between the other first surface 110 and the other first groove wall, the other first surface 110 needs to abut the other first groove wall, to fasten the magnetic steel 100. This imposes a high requirement on insulation and isolation between the other first surface 110 and the other first groove wall. In this application, the protective coating 220 is disposed between the other first surface 110 and the other first groove wall, to effectively isolate the magnetic steel 100 from the rotor iron core 300.

It should be noted that, in the motor rotor 10, the motor 4, and the electric vehicle provided in this application, the magnetic steel 100 is fastened in the magnetic steel groove 310 of the rotor iron core 300, and the fastening coating 210 is in the expanded state in this case. Unless otherwise specified, a structure and a position feature of the fastening coating 210 are a structure and a position feature of the fastening coating 210 in the expanded state.

In an embodiment, the fastening coating 210 includes a foaming coating. The foaming coating can expand when heated, and the expanded foaming coating can be cured after the expanded foaming coating is cooled. Due to an expansion feature of the foaming coating, the foamed foaming coating is used to fill a gap between the magnetic steel 100 and the inner wall of the magnetic steel groove 310, so that the magnetic steel 100 is tightly bonded to the inner wall of the magnetic steel groove 310, to fasten the magnetic steel 100. In this embodiment of this application, the foaming coating is used as the fastening coating 210, so that a process is simple, and the magnetic steel 100 can be reliably fastened.

In an implementation, the foaming coating includes at least one of a dry powder foaming coating, a glue foaming coating, and a foaming tape.

In an embodiment, the protective coating 220 includes an epoxy coating. The epoxy coating has poor conductivity, and has an insulation function. In this embodiment of this application, the epoxy coating is used as the protective coating 220, so that the magnetic steel 100 can be better insulated and isolated from the rotor iron core 300. When the epoxy coating is coated on the other first surface 110 of the magnetic steel 100, the epoxy coating can better protect the magnetic steel 100, thereby improving anti-corrosion performance of the magnetic steel 100.

In an implementation, the epoxy coating includes at least one of an electrophoresis epoxy coating, a sprayed epoxy coating, an aluminum epoxy coating, and a copper-nickel epoxy coating.

In an embodiment, in the arrangement direction of the two first surfaces 110, a thickness of the fastening coating 210 is greater than a thickness of the protective coating 220. The thickness of the fastening coating 210 is d1 in FIG. 4, and the thickness of the protective coating 220 is d2 in FIG. 4. In this embodiment of this application, a large thickness of the fastening coating 210 helps firmly fasten the magnetic steel 100 in the magnetic steel groove 310 by using the fastening coating 210. A small thickness of the protective coating 220 helps reduce a total size of the protective coating 220 and the magnetic steel 100 in the arrangement direction of the two first surfaces 110 and reduce an equivalent air gap length of a magnetic circuit.

In an embodiment, in the arrangement direction of the two first surfaces 110, a ratio of the thickness of the fastening coating 210 to the thickness of the protective coating 220 is greater than 1, and is less than or equal to 1000. The thickness of the fastening coating 210 and the thickness of the protective coating 220 affect isolation and fastening reliability between the magnetic steel 100 and the rotor iron core 300. In this embodiment of this application, the ratio of the thickness of the fastening coating 210 to the thickness of the protective coating 220 is greater than 1, and is less than or equal to 1000. This helps firmly fasten the magnetic steel 100 in the magnetic steel groove 310 of the rotor iron core 300 by using the fastening coating 210, and helps effectively isolate the two first surfaces 110 of the magnetic steel 100 from the rotor iron core 300 by using the fastening coating 210 and the protective coating 220.

For example, in the arrangement direction of the two first surfaces 110, the ratio of the thickness of the fastening coating 210 to the thickness of the protective coating 220 is 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.5, 4, 4.5, 5, 5.5, 6, 6.5, 7, 7.5, 8, 8.5, 9, 9.5, 10, 15, 20, 25, 30, 35, 40, 45, 50, 60, 70, 80, 90, 100, 200, 300, 400, 500, 600, 700, 800, 900, or 1000.

In an implementation, the thickness of the fastening coating 210 ranges from 0.01 mm to 5 mm. The thickness of the fastening coating 210 in this embodiment of this application is a thickness of the fastening coating 210 in the expanded state after the fastening coating 210 in the contracted state is foamed. For example, the thickness of the fastening coating 210 may be 0.01 mm, 0.1 mm, 0.2 mm, 0.3 mm, 0.4 mm, 0.5 mm, 0.6 mm, 0.7 mm, 0.8 mm, 0.9 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, 4 mm, 4.2 mm, 4.4 mm, 4.6 mm, 4.8 mm, or 5 mm. In this embodiment of this application, the thickness of the fastening coating 210 ranges from 0.01 mm to 5 mm, so that the magnetic steel 100 can be firmly fastened in the magnetic steel groove 310 of the rotor iron core 300 by using the fastening coating 210.

In an implementation, the thickness of the protective coating 220 ranges from 5 µm to 30 µm. For example, the thickness of the protective coating 220 may be 5 µm, 5.5 µm, 6 µm, 6.5 µm, 7 µm, 7.5 µm, 8 µm, 8.5 µm, 9 µm, 9.5 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. In this embodiment of this application, the thickness of the protective coating 220 ranges from 5 µm to 30 µm, so that the protective coating 220 can isolate the magnetic steel 100 from the rotor iron core 300, and a small thickness of the protective coating 220 helps reduce an equivalent air gap length of a magnetic circuit.

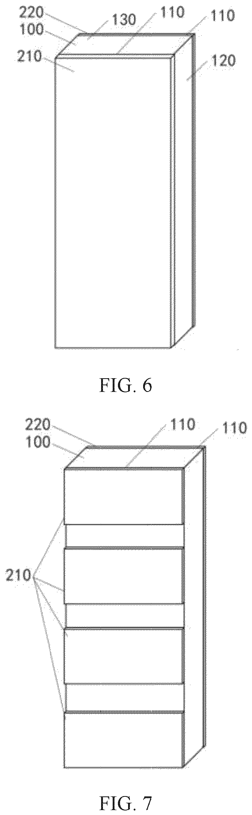

FIG. 6 is a three-dimensional diagram of one magnetic steel 100, one fastening coating 210, and one protective coating 220 according to an embodiment of this application. In an embodiment, a projection of the one fastening coating 210 in the arrangement direction of the two first surfaces 110 covers one first surface 110. An orthographic projection area of the one fastening coating 210 on the one first surface 110 in the arrangement direction of the two first surfaces 110 is equal to an area of the one first surface 110. A large projection area of the fastening coating 210 helps firmly fasten the magnetic steel 100 by using the fastening coating 210 and effectively isolate the one first surface 110 from one first groove wall.

In an embodiment, a projection of the one protective coating 220 in the arrangement direction of the two first surfaces 110 covers the other first surface 110. An orthographic projection area of the one protective coating 220 on the other first surface 110 in the arrangement direction of the two first surfaces 110 is equal to an area of the other first surface 110. A large projection area of the fastening coating 220 helps firmly fasten the magnetic steel 100 by using the fastening coating 220 and effectively isolate the other first surface 110 from the other first groove wall.

In an embodiment, the orthographic projection area of the one fastening coating 210 on the one first surface 110 in the arrangement direction of the two first surfaces 110 is less than or equal to the orthographic projection area of the one protective coating 220 on the one first surface 110 in the arrangement direction of the two first surfaces 110. Because the fastening coating 210 is mainly used to fasten the magnetic steel 100, a small orthographic projection area of the fastening coating 210 on the first surface 110 can also be conducive to fastening. Because the fastening coating 210 is arranged between the one first surface 110 and the one first groove wall, the one first surface 110 is spaced from the one first groove wall, so that the one first surface 110 is insulated and isolated from the rotor iron core 300. In addition, because the fastening coating 210 does not completely cover the one first surface 110, a gap between the one first surface 110 and the one first groove wall may be used to circulate a coolant, to cool the magnetic steel 100.

In addition, because the thickness of the one protective coating 220 is small, in this embodiment of this application, setting the orthographic projection area of the one protective coating 220 on the one first surface 110 to be large helps effectively isolate the other first surface 110 of the magnetic steel 100 from the other first groove wall. When the one protective coating 220 is coated on the other first surface 110, the protective coating 220 largely covers the other first surface 110, so that the protective coating 220 can effectively protect the magnetic steel 100.

In an embodiment, a ratio of the orthographic projection area of the one fastening coating 210 on the one first surface 110 in the arrangement direction of the two first surfaces 110 to the orthographic projection area of the one protective coating 220 on the one first surface 110 in the arrangement direction of the two first surfaces 110 is less than or equal to 1, and is greater than or equal to 0.1. A projection area of the one fastening coating 210 and a projection area of the one protective coating 220 affect isolation and fastening reliability between the magnetic steel 100 and the rotor iron core 300. In this embodiment of this application, a ratio of the projection area of the one fastening coating 210 to the projection area of the one protective coating 220 is less than or equal to 1, and is greater than or equal to 0.1. This helps the one fastening coating 210 firmly fasten the magnetic steel 100 in the magnetic steel groove 310 of the rotor iron core 300, and reduces costs. In addition, this also helps effectively isolate the two first surfaces 110 of the magnetic steel 100 from the rotor iron core 300 by using the one fastening coating 210 and the one protective coating 220.

In an embodiment, the ratio of the orthographic projection area of the one fastening coating 210 on the one first surface 110 in the arrangement direction of the two first surfaces 110 to the orthographic projection area of the one protective coating 220 on the one first surface 110 in the arrangement direction of the two first surfaces 110 may be 1, 0.9, 0.8, 0.7, 0.6, 0.5, 0.4, 0.3, 0.2, or 0.1.

FIG. 7 is a three-dimensional diagram of one magnetic steel 100, one fastening coating 210, and one protective coating 220 according to an embodiment of this application. In an implementation, the one fastening coating 210 includes a plurality of sub-coatings spaced from each other. For example, the plurality of sub-coatings are sequentially arranged at intervals in the axial direction of the rotor iron core 300. In the arrangement direction of the two first surfaces 110, projections of the plurality of sub-coatings do not overlap each other. In this embodiment of this application, a gap between two adjacent sub-coatings may be used to circulate a coolant, to facilitate heat dissipation of the magnetic steel 100.

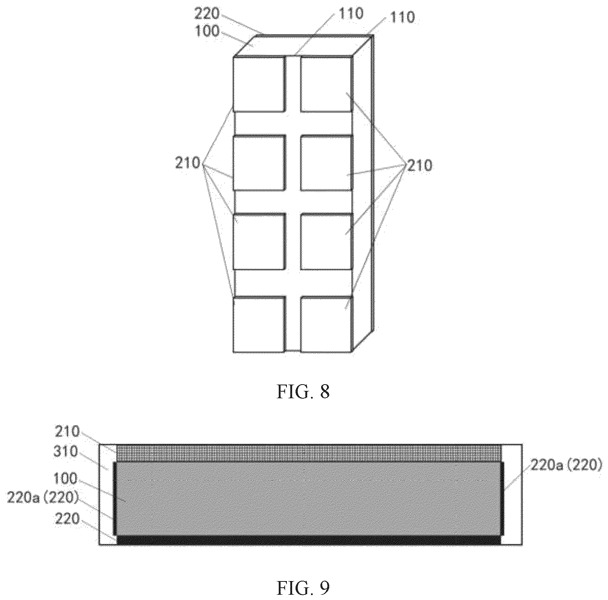

FIG. 8 is a three-dimensional diagram of one magnetic steel 100, one fastening coating 210, and one protective coating 220 according to an embodiment of this application. In an implementation, the one fastening coating 210 includes a plurality of columns of sub-coatings, and the plurality of columns of sub-coatings are sequentially arranged at intervals in a width direction of the magnetic steel 100. Each column of sub-coatings includes at least two sub-coatings. The at least two sub-coatings are sequentially arranged at intervals in the axial direction of the rotor iron core 300. The width direction of the magnetic steel 100 is perpendicular to the axial direction of the rotor iron core 300, and is perpendicular to the arrangement direction of the two first surfaces 110.

In an embodiment, when the fastening coating 210 is in the contracted state, the fastening coating 210 includes a plurality of sub-coatings spaced from each other. Orthographic projection areas of the plurality of sub-coatings on the one first surface 110 in the arrangement direction of the two first surfaces 110 when the plurality of sub-coatings are in the contracted state are less than orthographic projection areas of the plurality of sub-coatings on the one first surface 110 in the arrangement direction of the two first surfaces 110 when the plurality of sub-coatings are in the expanded state. In an implementation, after the plurality of sub-coatings in the contracted state are foamed, the plurality of sub-coatings are connected to each other. In this way, the fastening coating 210 in the expanded state can continuously cover the one first surface 110, so that the fastening coating 210 can better protect the one first surface 110.

In this embodiment of this application, the fastening coating 210 in the contracted state includes the plurality of sub-coatings that are spaced from each other. This helps the fastening coating 210 in the contracted state fully foam into the fastening coating 210 in the expanded state. In addition, a gap between two adjacent sub-coatings in the contracted state may be used for foaming, to reduce a case in which the fastening coating 210 is foamed beyond the gap between the one first surface 110 and one first groove wall.

In an embodiment, a ratio of a spacing between the two adjacent sub-coatings in the contracted state to a thickness of a sub-coating in the contracted state is greater than or equal to 0.1, and is less than or equal to 50. In this embodiment of this application, the spacing between the adjacent sub-coatings in the contracted state falls within a proper range. This helps foaming of the fastening coating 210 to better fasten the magnetic steel 100. In addition, this also reduces overflow of the fastening coating 210.

In an implementation, the spacing between the two adjacent sub-coatings in the contracted state ranges from 0.5 mm to 500 mm. For example, the spacing between the two adjacent sub-coatings in the contracted state may be 0.5 mm, 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, 80 mm, 90 mm, 100 mm, 200 mm, 300 mm, 400 mm, or 500 mm.

In an implementation, the thickness of the sub-coating in the contracted state ranges from 0.01 mm to 2 mm. For example, the thickness of the sub-coating in the contracted state may be 0.01 mm, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm.

In an embodiment, the one fastening coating 210 includes two first side surfaces, the two first side surfaces face away from each other in the arrangement direction of the two first surfaces 110, and the two first side surfaces are respectively in contact with the one first surface 110 and an inner wall of the magnetic steel groove 310. The two first side surfaces of the fastening coating 210 are two side surfaces with largest areas in six surfaces of the fastening coating 210. In this embodiment of this application, the two first side surfaces of the fastening coating 210 are respectively in contact with the one first surface 110 and the one first groove wall. This helps fasten the magnetic steel 100 to the rotor iron core 300 by using the fastening coating 210.

In an embodiment, the arrangement direction of the two first surfaces 110 is parallel to an arrangement direction of a magnetic south pole and a magnetic north pole of the magnetic steel 100. The two first side surfaces of the fastening coating 210 are respectively in contact with the one first surface 110 and the one first groove wall. This helps reduce a spacing between the one first surface 110 and the one first groove wall, and reduces an equivalent air gap of a magnetic circuit.

In an embodiment, at least one of one epoxy coating and one phosphate coating is further included between the one fastening coating 210 and the one first surface 110. The phosphate coating includes at least one of a zinc phosphate coating, an iron phosphate coating, a manganese phosphate coating, a biphosphate coating, a triphosphate coating, and a polyphosphate coating. In an implementation, the one first surface 110 is coated with a phosphate coating, and the two first side surfaces of the one fastening coating 210 are respectively in contact with the phosphate coating and the inner wall of the magnetic steel groove 310. The phosphate coating may be used to protect the magnetic steel 100, and improve bonding force between the one fastening coating 210 and the one first surface 110.

In an implementation, a thickness of the phosphate coating ranges from 3 µm to 5 µm. For example, the thickness of the phosphate coating may be 3 µm, 3.2 µm, 3.4 µm, 3.8 µm, 4 µm, 4.2 µm, 4.4 µm, 4.6 µm, 4.8 µm, or 5 µm. The thickness of the phosphate coating falls within an appropriate range. This helps attachment of the phosphate coating to a surface of the magnetic steel 100.

In an implementation, the one first surface 110 is coated with an epoxy coating, and the two first side surfaces of the one fastening coating 210 are respectively in contact with the epoxy coating and the inner wall of the magnetic steel groove 310. Compared with the fastening coating 210, the epoxy coating has a stronger anti-corrosion capability. The epoxy coating is added between the fastening coating 210 and the magnetic steel 100, to better protect the magnetic steel 100, and effectively improve anti-corrosion performance of the magnetic steel 100.

In an embodiment, a thickness of the epoxy coating arranged between the one fastening coating 210 and the one first surface 110 in the arrangement direction of the two first surfaces 110 is less than or equal to a thickness of the one protective coating 220, and is less than a thickness of the one fastening coating 210. In this embodiment of this application, because two coatings such as the epoxy coating and the fastening coating 210 are arranged between the one first surface 110 and the one first groove wall, the one first surface 110 may be insulated and isolated from the one first groove wall by using the one fastening coating 210. A small thickness of the epoxy coating arranged between the one fastening coating 210 and the one first surface 110 may reduce costs.

In an implementation, one epoxy coating and one phosphate coating are alternatively included between the one fastening coating 210 and the one first surface 110, and the one fastening coating 210, the one epoxy coating, the one phosphate coating, and the one first surface 110 are sequentially arranged. The one first surface 110 is coated with two coatings, so that anti-corrosion performance of the magnetic steel 100 is greatly improved. In addition, because the phosphate coating has good infiltration performance, arranging the phosphate coating between the one epoxy coating and the one first surface 110 can improve bonding force between the epoxy coating and the magnetic steel 100.

Refer to FIG. 3 and FIG. 4. In an embodiment, one first side surface of the one fastening coating 210 is fastened to the one first surface 110. The other first side surface of the one fastening coating 210 abuts one first groove wall. The fastening coating 210 before foaming may be first coated on the one first surface 110 of the magnetic steel 100, then the magnetic steel 100 is placed in the magnetic steel groove 310, and the fastening coating 210 expands due to heating, to fasten the magnetic steel 100. In this embodiment of this application, the fastening coating 210 is fastened to the magnetic steel 100. This helps assembly of the fastening coating 210 and the magnetic steel 100 and fastening of the fastening coating 210 and the magnetic steel 100 in the magnetic steel groove 310. In addition, because the fastening coating 210 is fastened to the one first surface 110, the fastening coating 210 can isolate the one first surface 110 from air, thereby improving anti-corrosion performance of the magnetic steel 100.

In an embodiment, the other first side surface of the one fastening coating 210 is fastened to the inner wall of the magnetic steel groove 310. The one first side surface of the one fastening coating 210 may abut the one first surface 110. The fastening coating 210 before foaming may be first coated on the one first groove wall of the magnetic steel groove 310, then the magnetic steel 100 is placed in the magnetic steel groove 310, and the fastening coating 210 expands due to heating, to fasten the magnetic steel 100.

In an embodiment, the one protective coating 220 includes two second side surfaces, the two second side surfaces face away from each other in the arrangement direction of the two first surfaces 110, and the two second side surfaces are respectively in contact with the other first surface 110 and an inner wall of the magnetic steel groove 310. The two second side surfaces of the protective coating 220 are two side surfaces with largest areas in six surfaces of the protective coating 220. In this embodiment of this application, the two second side surfaces of the protective coating 220 are respectively in contact with the other first surface 110 and the other first groove wall. This helps fasten the magnetic steel 100 to the rotor iron core 300 through cooperation of the fastening coating 210. In addition, because the protective coating 220 is in contact with the other first surface 110, the protective coating 220 can protect the magnetic steel 100, thereby reducing a risk of oxidation of the magnetic steel 100. The protective coating 220 is in contact with the other first groove wall. This helps reduce a spacing between the other first surface 110 and the other first groove wall, thereby reducing an equivalent air gap of a magnetic circuit.

In an embodiment, one phosphate coating is further included between the one protective coating 220 and the other first surface 110. The other first surface 110 is coated with two coatings, so that anti-corrosion performance of the magnetic steel 100 is greatly improved. In addition, because the phosphate coating has good infiltration performance, arranging the phosphate coating between the one protective coating 220 and the other first surface 110 can improve bonding force between the protective coating 220 and the magnetic steel 100.

In an embodiment, one second side surface of the one protective coating 220 is fastened to the other first surface 110. The other second side surface abuts the other first groove wall. The protective coating 220 may be first coated on the other first surface 110 of the magnetic steel 100, and then the protective coating 220 and the magnetic steel 100 are mounted and fastened in the magnetic steel groove 310 together. In this embodiment of this application, the protective coating 220 is fastened to the magnetic steel 100. This helps assembly of the protective coating 220 and the magnetic steel 100 and fastening of the protective coating 220 and the magnetic steel 100 in the magnetic steel groove 310. In addition, because the protective coating 220 is fastened to the other first surface 110, the protective coating 220 can isolate the other first surface 110 from air, thereby improving anti-corrosion performance of the magnetic steel 100.

In an implementation, the other second side surface of the one protective coating 220 is fastened to the inner wall of the magnetic steel groove 310. The one second side surface of the one protective coating 220 may abut the other first surface 110. The protective coating 220 may be first coated on the other first groove wall, and then the magnetic steel 100 is mounted and fastened in the magnetic steel groove 310. The protective coating 220 is located between the other first surface 110 and the other first groove wall, so that the other first surface 110 can be isolated from the other first groove wall.

Refer to FIG. 3. In an embodiment, in a radial direction of the rotor iron core 300, a minimum distance between the one fastening coating 210 and an outer circumferential surface of the rotor iron core 300 is greater than a minimum distance between the one protective coating 220 and the outer circumferential surface of the rotor iron core 300. In the radial direction of the rotor iron core 300, a minimum distance between the one first surface 110 and the outer circumferential surface of the rotor iron core 300 is greater than a minimum distance between the other first surface 110 and the outer circumferential surface of the rotor iron core 300. The radial direction of the rotor iron core 300 is perpendicular to the axial direction of the rotor iron core 300. In this embodiment of this application, the motor stator is sleeved on the outer circumferential surface of the rotor iron core 300. A spacing between the one first surface 110 and a groove wall of the magnetic steel groove 310 is large, and the fastening coating 210 has a low magnetic permeability. Therefore, disposing the fastening coating 210 away from the motor stator helps reduce magnetic resistance of the motor rotor 10, to improve output performance of the motor 4.

Refer to FIG. 4 and FIG. 5. In an embodiment, the one magnetic steel 100 includes two second surfaces 120 parallel to the axial direction of the rotor iron core 300, the two second surfaces 120 are arranged opposite to each other, and the second surfaces 120 intersect the first surfaces 110. A spacing between the one first surface 110 and the inner wall of the magnetic steel groove 310 is less than a spacing between any second surface 120 and an inner wall of the magnetic steel groove 310. The two second surfaces 120 of the magnetic steel 100 are parallel to each other, and a plane on which the second surface 120 is located is parallel to the axial direction of the rotor iron core 300. An arrangement direction of the two second surfaces 120 is perpendicular to the plane on which the second surface 120 is located, and is perpendicular to the arrangement direction of the two first surfaces 110.

The magnetic steel groove 310 includes two second groove walls arranged opposite to each other in the arrangement direction of the two second surfaces 120. The two second surfaces 120 are respectively spaced from the two second groove walls. In the arrangement direction of the two second surfaces 120, the spacing between the one first surface 110 and the inner wall of the magnetic steel groove 310 is less than a spacing between one second surface 120 and one second groove wall, and is less than a spacing between the other second surface 120 and the other second groove wall.

In this embodiment of this application, the spacing between the one first surface 110 and the inner wall of the magnetic steel groove 310 is less than the spacing between the second surface 120 and the inner wall of the magnetic steel groove 310, so that the fastening coating 210 arranged between the one first surface 110 and the one first groove wall can fasten the magnetic steel 100, and the fastening coating 210 is not wasted due to an excessively large thickness of the fastening coating 210. When the arrangement direction of the two first surfaces 110 is parallel to an arrangement direction of a magnetic south pole and a magnetic north pole of the magnetic steel 100, a small spacing between the one first surface 110 and the one first groove wall helps reduce an equivalent air gap of a magnetic circuit. A spacing between the other first surface 110 and the other first groove wall is less than the spacing between the second surface 120 and the inner wall of the magnetic steel groove 310. This also helps reduce the equivalent air gap of the magnetic circuit. In addition, the spacing between the second surface 120 and the inner wall of the magnetic steel groove 310 is large, so that the second surface 120 may be insulated and isolated from the magnetic steel groove 310 through air. This helps reduce costs.

Refer to FIG. 4 and FIG. 6. In an embodiment, an area of the first surface 110 is greater than an area of the second surface 120. The area of the first surface 110 is large, the fastening coating 210 is arranged between the one first surface 110 and a groove wall of the magnetic steel groove 310, and a contact area between the fastening coating 210 and the one first surface 110 is large. In this way, the magnetic steel 100 can be more firmly fastened in the magnetic steel groove 310. Areas of the two first surfaces 110 are large. Therefore, a larger insulation requirement is imposed between the two first surfaces 110 and the rotor iron core 300. The fastening coating 210 and the protective coating 220 are respectively arranged between the one first surface 110 and the inner wall of the magnetic steel groove 310 and between the other first surface 110 and an inner wall of the magnetic steel groove 310, to effectively isolate the magnetic steel 100 from the rotor iron core 300.

In an embodiment, an orthographic projection area of the one fastening coating 210 on the one first surface 110 in the arrangement direction of the two first surfaces 110 is greater than an area of any second surface 120. The orthographic projection area of the fastening coating 210 on the one first surface 110 is large, so that the fastening coating 210 can more firmly fasten the magnetic steel 100 in the magnetic steel groove 310. In addition, when the fastening coating 210 is coated on the one first surface 110, a projection area of the fastening coating 210 is large, so that the fastening coating 210 can more completely cover the one first surface 110, to better protect the magnetic steel 100.

Refer to FIG. 4 and FIG. 6. In an embodiment, an orthographic projection area of the one protective coating 220 on the one first surface 110 in the arrangement direction of the two first surfaces 110 is greater than the area of any second surface 120. The orthographic projection area of the protective coating 220 on the one first surface 110 is large, so that the protective coating 220 can effectively isolate the magnetic steel 100 from the rotor iron core 300. In addition, when the protective coating 220 is coated on the other first surface 110, a projection area of the protective coating 220 is large, so that the protective coating 220 can more completely cover the other first surface 110, to better protect the magnetic steel 100.

With reference to FIG. 5 and FIG. 9, in an embodiment, a gap between one second surface 120 and an inner wall of the magnetic steel groove 310 is used to accommodate one protective coating 220. The one protective coating 220 accommodated in the gap between the one second surface 120 and the inner wall of the magnetic steel groove 310 is spaced from the inner wall of the magnetic steel groove 310, and is in contact with the one second surface 120. For ease of description, the one protective coating 220 arranged between the one second surface 120 and the inner wall of the magnetic steel groove 310 is defined as a protective coating 220a. The protective coating 220a includes two side surfaces facing away from each other in the arrangement direction of the two second surfaces 120, and one side surface of the protective coating 220a is in contact with the one second surface 120. For example, the one side surface of the protective coating 220a may be fastened to the one second surface 120. The other side surface of the protective coating 220a is spaced from one second groove wall.

In this embodiment of this application, because the protective coating 220a is in contact with the one second surface 120, the protective coating 220a may protect the magnetic steel 100, thereby improving anti-corrosion performance of the magnetic steel 100. The protective coating 220a is spaced from the one second groove wall, and a gap between the protective coating 220a and the one second groove wall may be used to circulate a coolant, to facilitate heat dissipation of the magnetic steel 100.

In an embodiment, a gap between the one second surface 120 and the inner wall of the magnetic steel groove 310 may alternatively be used to accommodate one phosphate coating. The one phosphate coating is spaced from the inner wall of the magnetic steel groove 310, and is in contact with the one second surface 120. The phosphate coating can also be used for anti-corrosion. In addition, compared with an epoxy coating, the phosphate coating has a lower price. Therefore, costs can be reduced by coating the second surface 120 with the phosphate coating.

In an embodiment, the gap between the one second surface 120 and the inner wall of the magnetic steel groove 310 is configured to accommodate one protective coating 220a and one phosphate coating. The phosphate coating is arranged between the one second surface 120 and the one protective coating 220a, and the one protective coating 220a is spaced from the inner wall of the magnetic steel groove 310, and is in contact with the one phosphate coating. In this embodiment of this application, the one second surface 120 is sequentially coated with the one phosphate coating and the one protective coating 220a, so that anti-corrosion performance of the magnetic steel 100 is greatly improved. In addition, because the phosphate coating has good infiltration performance, arranging the phosphate coating between the one protective coating 220a and the one second surface 120 can improve bonding force between the protective coating 220a and the magnetic steel 100.

In an embodiment, a thickness of the one protective coating 220a accommodated in the gap between the one second surface 120 and the inner wall of the magnetic steel groove 310 is less than a thickness of the one fastening coating 210, and is less than or equal to a thickness of the one protective coating 220. The thickness of the one protective coating 220a is a thickness of the protective coating 220a in the arrangement direction of the two second surfaces 120. The thickness of the one fastening coating 210 is a thickness of the fastening coating 210 in the arrangement direction of the two first surfaces 110. The one protective coating 220 is a protective coating 220 arranged between the other first surface 110 and the other first groove wall. The thickness of the one protective coating 220 is a thickness of the one protective coating 220 in the arrangement direction of the two first surfaces 110.

In this embodiment of this application, because the spacing between the one second surface 120 and the one second groove wall is large, the one second surface 120 may be insulated and isolated from the one second groove wall through air. A small thickness of the one protective coating 220a may reduce costs.

In an embodiment, a ratio of the thickness of the one protective coating 220a accommodated in the gap between the one second surface 120 and the inner wall of the magnetic steel groove 310 to the thickness of the one fastening coating 210 is less than 1, and is greater than or equal to 0.001. A small thickness of the protective coating 220a may reduce preparation costs of the motor rotor 10.

In an embodiment, the ratio of the thickness of the one protective coating 220a accommodated in the gap between the one second surface 120 and the inner wall of the magnetic steel groove 310 to the thickness of the one fastening coating 210 may be 0.9, 0.8, 0.7, 0.6, 0.5, 0.4, 0.3, 0.2, 0.1, 0.09, 0.05, 0.01, 0.009, 0.005, or 0.001.

In an embodiment, the ratio of the thickness of the one protective coating 220a accommodated in the gap between the one second surface 120 and the inner wall of the magnetic steel groove 310 to the thickness of the one protective coating 220 is less than or equal to 1, and is greater than or equal to 0.001. In this embodiment of this application, the one protective coating 220 arranged between the other first surface 110 and the other first groove wall is configured to isolate the other first surface 110 from the rotor iron core 300, and the one protective coating 220 needs to have a specific thickness to ensure isolation performance of the magnetic steel 100. Because the protective coating 220a is isolated from one second groove wall, the gap between the protective coating 220a and the one second groove wall can effectively isolate the one second surface 120 from the rotor iron core 300. Because the protective coating 220a mainly protects the one second surface 120, a small thickness of the protective coating 220a can reduce preparation costs of the motor rotor 10.

In an embodiment, the ratio of the thickness of the one protective coating 220a accommodated in the gap between the one second surface 120 and the inner wall of the magnetic steel groove 310 to the thickness of the one protective coating 220 is 1, 0.95, 0.9, 0.85, 0.8, 0.75, 0.7, 0.65, 0.6, 0.55, 0.5, 0.45, 0.4, 0.35, 0.3, 0.25, 0.2, 0.15, 0.1, 0.09, 0.08, 0.07, 0.06, 0.05, 0.04, 0.03, 0.02, 0.01, 0.009, 0.005, or 0.001.

With reference to FIG. 5 and FIG. 9, in an embodiment, a gap between the other second surface 120 and an inner wall of the magnetic steel groove 310 is used to accommodate one protective coating 220. For a structure and a position relationship of the one protective coating 220 accommodated in the gap between the other second surface 120 and the inner wall of the magnetic steel groove 310, refer to the foregoing structure and position relationship of the one protective coating 220a accommodated in the gap between the one second surface 120 and the inner wall of the magnetic steel groove 310. Details are not described herein again.

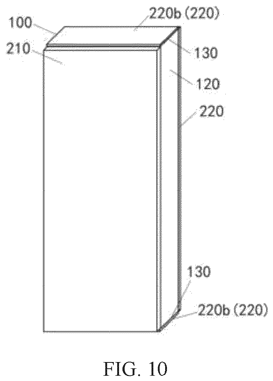

FIG. 10 is a three-dimensional diagram of one magnetic steel 100 and a plurality of coatings according to an embodiment of this application. In an embodiment, the one magnetic steel 100 includes two third surfaces 130 perpendicular to the axial direction of the rotor iron core 300, and the third surfaces 130 intersect the first surfaces 110. The magnetic steel 100 is a cube, and the magnetic steel 100 includes six surfaces. The two first surfaces 110 and the two second surfaces 120 of the magnetic steel 100 are accommodated in the magnetic steel groove 310, and are parallel to the axial direction of the rotor iron core 300. The two third surfaces 130 of the magnetic steel 100 are parallel to each other, and a plane on which the third surface 130 is located is perpendicular to the axial direction of the rotor iron core 300, and is perpendicular to the second surface 120. An arrangement direction of the two third surfaces 130 is perpendicular to the plane on which the third surface 130 is located, and is perpendicular to the arrangement direction of the two first surfaces 110.

Refer to FIG. 10. In an embodiment, an area of the first surface 110 is greater than an area of the third surface 130. The area of the first surface 110 is large, the fastening coating 210 is arranged between the one first surface 110 and a groove wall of the magnetic steel groove 310, and a contact area between the fastening coating 210 and the one first surface 110 is large. In this way, the magnetic steel 100 can be more firmly fastened in the magnetic steel groove 310. Areas of the two first surfaces 110 are large. Therefore, a larger insulation requirement is imposed between the two first surfaces 110 and the rotor iron core 300. The fastening coating 210 and the protective coating 220 are respectively arranged between the one first surface 110 and the inner wall of the magnetic steel groove 310 and between the other first surface 110 and an inner wall of the magnetic steel groove 310, to effectively isolate the magnetic steel 100 from the rotor iron core 300.

In an embodiment, an area of the second surface 120 is greater than the area of the third surface 130.

Refer to FIG. 10. In an embodiment, an orthographic projection area of the one fastening coating 210 on the one first surface 110 in the arrangement direction of the two first surfaces 110 is greater than an area of any third surface 130. The orthographic projection area of the fastening coating 210 on the one first surface 110 is large, so that the fastening coating 210 can more firmly fasten the magnetic steel 100 in the magnetic steel groove 310. In addition, when the fastening coating 210 is coated on the one first surface 110, a projection area of the fastening coating 210 is large, so that the fastening coating 210 can more completely cover the one first surface 110, to better protect the magnetic steel 100.

Refer to FIG. 10. In an embodiment, an orthographic projection area of the one protective coating 220 on the one first surface 110 in the arrangement direction of the two first surfaces 110 is greater than the area of any third surface 130. The orthographic projection area of the protective coating 220 on the one first surface 110 is large, so that the protective coating 220 can effectively isolate the magnetic steel 100 from the rotor iron core 300. In addition, when the protective coating 220 is coated on the other first surface 110, a projection area of the protective coating 220 is large, so that the protective coating 220 can more completely cover the other first surface 110, to better protect the magnetic steel 100.

In an embodiment, one protective coating 220 is fastened to one third surface 130. For ease of description, the one protective coating 220 fastened to the one third surface 130 is defined as a protective coating 220b. In this embodiment of this application, because the protective coating 220b is in contact with the one third surface 130, the protective coating 220b may protect the magnetic steel 100, thereby improving anti-corrosion performance of the magnetic steel 100.

In an embodiment, one third surface 130 may alternatively be configured to fasten one phosphate coating. The phosphate coating can also be used for anti-corrosion. In addition, compared with an epoxy coating, the phosphate coating has a lower price. Therefore, costs can be reduced by coating the third surface 130 with the phosphate coating.

In an embodiment, one third surface 130 is configured to fasten one protective coating 220b and one phosphate coating. The phosphate coating is arranged between the one third surface 130 and the one protective coating 220b. In this embodiment of this application, the one third surface 130 is sequentially coated with the one phosphate coating and the one protective coating 220b, so that anti-corrosion performance of the magnetic steel 100 is greatly improved. In addition, because the phosphate coating has good infiltration performance, arranging the phosphate coating between the one protective coating 220b and the one third surface 130 can improve bonding force between the protective coating 220b and the magnetic steel 100.

In an embodiment, a thickness of the one protective coating 220 fastened to the one third surface 130 is less than a thickness of the one fastening coating 210, and is less than or equal to a thickness of the one protective coating 220. A thickness of the protective coating 220b is a thickness of the protective coating 220b in the arrangement direction of the two third surfaces 130. The thickness of the one fastening coating 210 is a thickness of the fastening coating 210 in the arrangement direction of the two first surfaces 110. The one protective coating 220 is a protective coating 220 arranged between the other first surface 110 and the other first groove wall. The thickness of the one protective coating 220 is a thickness of the one protective coating 220 in the arrangement direction of the two first surfaces 110.

In this embodiment of this application, because the third surface 130 is not in contact with the inner wall of the magnetic steel groove 310, and there is no insulation and isolation requirement between the third surface 130 and the rotor iron core 300, a small thickness of the one protective coating 220b can reduce costs.

In an embodiment, a ratio of the thickness of the one protective coating 220 fastened to the one third surface 130 to the thickness of the one fastening coating 210 is less than 1, and is greater than or equal to 0.001. A small thickness of the protective coating 220b may reduce preparation costs of the motor rotor 10.

In an embodiment, a ratio of the thickness of the one protective coating 220 fastened to the one third surface 130 to the thickness of the one protective coating 220 is less than or equal to 1, and is greater than or equal to 0.001. In this embodiment of this application, because the protective coating 220b mainly protects the one third surface 130, a small thickness of the protective coating 220b can reduce preparation costs of the motor rotor 10.

In an embodiment, the other third surface 130 is configured to accommodate one protective coating 220. For a structure and a position relationship of the one protective coating 220 fastened to the other third surface 130, refer to the foregoing structure and position relationship of the one protective coating 220a fastened to the one third surface 130. Details are not described herein again.

The foregoing describes in detail the motor rotor including the magnetic steels with the plurality of coatings, the motor, the powertrain, and the vehicle provided in embodiments of this application. Specific examples are used in this specification to describe principles and embodiments of this application, and the foregoing descriptions of embodiments are merely used to help understand the method and core ideas of this application. In addition, a person of ordinary skill in the art may make modifications to the specific embodiments and the application scope based on the ideas of this application. In conclusion, the content of this specification shall not be construed as a limitation on this application.

## Claims

1. A motor rotor comprising magnetic steels with a plurality of coatings, wherein the motor rotor comprises a rotor iron core, a plurality of magnetic steels, a plurality of fastening coatings, a plurality of protective coatings, the rotor iron core comprises a plurality of magnetic steel grooves, the magnetic steel groove penetrates the rotor iron core in an axial direction of the rotor iron core, and each magnetic steel groove is configured to accommodate one or more magnetic steels; and
the one magnetic steel comprises two first surfaces parallel to the axial direction of the rotor iron core, the two first surfaces are arranged opposite to each other, a spacing between one first surface and an inner wall of one magnetic steel groove is greater than a spacing between the other first surface and an inner wall of the magnetic steel groove, a gap between the one first surface and the inner wall of the magnetic steel groove is used to accommodate one fastening coating, and a gap between the other first surface and the inner wall of the magnetic steel groove is used to accommodate one protective coating.

2. The motor rotor according to claim 1, wherein the one fastening coating comprises two first side surfaces, the two first side surfaces face away from each other in an arrangement direction of the two first surfaces, and the two first side surfaces are respectively in contact with the one first surface and the inner wall of the magnetic steel groove; and
the one protective coating comprises two second side surfaces, the two second side surfaces face away from each other in the arrangement direction of the two first surfaces, and the two second side surfaces are respectively in contact with the other first surface and the inner wall of the magnetic steel groove.

3. The motor rotor according to claim 2, wherein one first side surface of the one fastening coating is fastened to the one first surface, and one second side surface of the one protective coating is fastened to the other first surface.

4. The motor rotor according to claim 2 or 3, wherein an orthographic projection area of the one fastening coating on the one first surface in the arrangement direction of the two first surfaces is less than or equal to an orthographic projection area of the one protective coating on the one first surface in the arrangement direction of the two first surfaces.

5. The motor rotor according to any one of claims 1 to 4, wherein the one fastening coating comprises a foaming coating, and the one protective coating comprises an epoxy coating.

6. The motor rotor according to any one of claims 1 to 5, wherein in a radial direction of the rotor iron core, a minimum distance between the one fastening coating and an outer circumferential surface of the rotor iron core is greater than a minimum distance between the one protective coating and the outer circumferential surface of the rotor iron core.

7. The motor rotor according to any one of claims 1 to 6, wherein the one magnetic steel comprises two second surfaces parallel to the axial direction of the rotor iron core, the two second surfaces are arranged opposite to each other, and the second surfaces intersect the first surfaces; and
a spacing between the one first surface and the inner wall of the magnetic steel groove is less than a spacing between any second surface and an inner wall of the magnetic steel groove.

8. The motor rotor according to claim 7, wherein the orthographic projection area of the one fastening coating on the one first surface in the arrangement direction of the two first surfaces is greater than an area of any second surface, and the orthographic projection area of the one protective coating on the one first surface in the arrangement direction of the two first surfaces is greater than the area of any second surface.

9. The motor rotor according to claim 7 or 8, wherein a gap between one second surface and the inner wall of the magnetic steel groove is used to accommodate one protective coating; and
the one protective coating accommodated in the gap between the one second surface and the inner wall of the magnetic steel groove is spaced from the inner wall of the magnetic steel groove, and is in contact with the one second surface.

10. The motor rotor according to claim 9, wherein a thickness of the one protective coating accommodated in the gap between the one second surface and the inner wall of the magnetic steel groove is less than a thickness of the one fastening coating, and is less than or equal to a thickness of the one protective coating.

11. The motor rotor according to any one of claims 1 to 10, wherein the one magnetic steel comprises two third surfaces perpendicular to the axial direction of the rotor iron core, the third surfaces intersect the first surfaces, the orthographic projection area of the one fastening coating on the one first surface in the arrangement direction of the two first surfaces is greater than an area of any third surface, and the orthographic projection area of the one protective coating on the one first surface in the arrangement direction of the two first surfaces is greater than the area of any third surface.

12. The motor rotor according to claim 11, wherein one protective coating is fastened to one third surface; and
a thickness of the one protective coating fastened to the one third surface is less than the thickness of the one fastening coating, and is less than or equal to the thickness of the one protective coating.

13. A motor, wherein the motor comprises a motor shaft and the motor rotor according to any one of claims 1 to 12, and a rotor iron core of the motor rotor is sleeved on and fastened to the motor shaft.

14. A powertrain, wherein the powertrain comprises a reducer and the motor according to claim 13, and a reducer input shaft of the reducer is configured to be in transmission connection with a motor shaft of the motor.
